# EUROPEAN PATENT APPLICATION

(11) **EP 2 549 199 A1**
(43) Date of publication of application: **23.01.2013**
(21) Application number: 12005306.1
(22) Date of filing: 20.07.2012
(51) Int. Cl.: F24J 2/46

(54) **Automatic cleaning device for a solar panel**

(30) Priority: 21.07.2011 IT TO20110659
(71) Applicant: Cannizzo, Giancarlo, 10132 Torino (IT); Gentina, Pierfranco, 10040 Leini' (TO) (IT); Pecchio, Marco, 10032 Brandizzo (TO) (IT)
(72) Inventor: Cannizzo, Giancarlo, 10132 Torino (IT); Gentina, Pierfranco, 10040 Leini' (TO) (IT); Pecchio, Marco, 10032 Brandizzo (TO) (IT)
(74) Representative: Aprà, Mario

(57) **Abstract**

An automatic cleaning device for a solar panel, comprising:
- longitudinal rectilinear guides (1), cleaning means (3) transversely arranged relative to the longitudinal guides (1), said drive unit (2), which is mounted moving linearly along the longitudinal guides (1) and is provided with at least one motor means (4) for rotary driving of the cleaning means (3) and the movement of said cleaning means (3), together with the drive unit (2), along the longitudinal guides (1), an electrical control panel and a rainwater / snow sensor which sends an electrical signal to the electrical control panel and determinates the start-up of the drive unit (2) when the sensor detects rainwater / snow.

Said longitudinal guides (1) extend horizontally, while the solar panel (S) is inclined relative to the horizontal plane, in such a manner that the guides (1) are arranged at different levels, one (1A) being higher relative to the other (1B).

According to the invention, the device comprises sliding means of said drive unit (2) with said cleaning means (3), which include at least one sliding carriage (8) housed sliding in each longitudinal guide (1) by means of a set of idle wheels (8.21, 8.31) arranged on at least two axes (8.2, 8.3) substantially perpendicular to each other.

## Description

The present invention relates to an automatic cleaning device for a solar panel.

There is known from the document EP 2.048.455 A2 an automatic cleaning device for a solar panel, comprising:
- - longitudinal rectilinear guides (1), fastened externally on opposite sides of the supporting structure of a solar panel (7), on a plane parallel to said solar panel (7),
- - a plurality of cleaning brushes (3) arranged transversely relative to the longitudinal guides (1) and mounted with the possibility of rotation relative to a drive unit (2),
- - said drive unit (2), which is mounted linearly moving along the longitudinal guides (1) and is provided with at least one motor means (4) for the rotary driving of the cleaning brushes (3) and the movement of said cleaning brushes (3), together with the drive unit (2), along the longitudinal guides (1),
- - an electrical control panel (5) and
- - a rainwater sensor (6) which sends an electrical signal to the electrical control panel (5) and causes start-up of the drive unit (2) when the sensor detects rainwater.

The drive unit (2) is connected to at least one of the longitudinal guides by means of a transmission mechanism, which causes linear displacement of this drive unit (2) along said longitudinal guide (1), when said drive unit (2) is activated. For correct operation, the longitudinal guides extend horizontally, while the related solar panel is inclined relative to the horizontal plane, in such a manner that these guides are normally arranged at different levels, one being higher relative to the other.

Moreover, said cleaning brushes (3) form a linear arrangement which covers the distance existing between the two longitudinal guides (1). The structure of said cleaning brushes is generally with uniformly distributed bristles over the whole of the body of the brush and forming a substantially uniform, cylindrical and continuous cleaning surface.

One problem of the prior art cleaning device derives from the fact that, since the solar panel with relative guide is inclined, the sliding means of the drive unit exert a lateral pressure with high friction on the inner wall of the guides facing downward, which causes rapid wear both of the guides and of these sliding means, and the risk of the latter jamming in the former. This fact involves frequent maintenance operations and replacement of parts.

Another drawback of the prior art cleaning device derives from the fact that the structure of the cleaning brushes with bristles uniformly distributed and forming a substantially cylindrical and continuous cleaning surface does not allow efficient removal of rainwater and snow from the surface of the solar panel, when these are present in significant quantities, as the bristles draw and distribute the substantial part of said atmospheric agents in the longitudinal direction of the panel, without facilitating removal in the direction of the slope of the surface of this panel.

Another problem of prior art automatic cleaning devices consists in the separate arrangement of the power supply line of the drive means of the cleaning brushes, relative to the guide means of these brushes, which involves considerable structure complication, with corresponding increased technical and economic expenditure.

Yet another problem of said prior art devices lies in the fact that the power supply line of said drive means of the brushes must be protected by means of suitable safety means, which also involve further increases both from a technical viewpoint and in relation to overall costs.

The present invention, starting from the notion of the aforesaid problems, intends to provide a solution.

An object of the invention is to provide an automatic cleaning device for a solar panel, wherein during operation, the sliding means of the drive unit do not exert appreciable lateral pressure with friction on the downward facing inner wall of the corresponding guides, when the solar panel is inclined, thereby reducing rapid wear and the risk of jamming of the guides and of these sliding means.

Another object of the invention is to provide an automatic cleaning device for a solar panel, wherein the brush cleaning means allow rainwater, snow and dirt to be discharged effectively from the surface of the solar panel, facilitating the removal thereof in the direction of the slope of the surface of the solar panel.

A further object is to provide an automatic cleaning device for a solar panel, wherein the power supply line of the drive means of the cleaning brushes is not separate relative to the guide means of these brushes, simplifying the structure of the device itself, and reducing the corresponding overall costs thereof.

In addition, a further object of the present invention is constituted by providing a device as said, wherein the power supply line of said drive means of the brushes is protected in a safe manner, by means of suitable safety means and with a relatively limited cost.

In view of these objects, the present invention provides an automatic cleaning device for a solar panel, the essential characteristic of which forms the subject of claim 1.

Further advantageous characteristics of the invention are described in the dependent claims.

The aforesaid claims are intended as fully incorporated herein. The present invention will be more apparent from the detailed description below, with reference to the accompanying drawing, provided purely by way of example, wherein:
- Fig. 1 is a schematic and perspective top view of a first embodiment of an automatic cleaning device for a solar panel according to the present invention;
- Fig. 2 is a side elevation of the cleaning device according to the invention, in the direction of the arrow II of Fig. 1, in a different scale;
- Figs. 3 and 4 are detailed views, in enlarged scale, of the details III and IV of Fig. 2, respectively;
- Fig. 5 is a detailed perspective view, in enlarged scale, of a sliding carriage which is part of the sliding means of the drive unit of the cleaning means of the device according to Fig. 1;
- Fig. 6 is a plan view in the direction of the arrow VI of Fig. 5,
- Fig. 7 is a side elevation in the direction of the arrow VII of Fig. 6;
- Fig. 8 is a partial perspective top view of a second embodiment of an automatic cleaning device for a solar panel, according to the present invention;
- Fig. 9 is a cross-sectional view of a longitudinal rectilinear guide of the device of Fig. 8, with corresponding sliding carriage;
- Fig. 10 is a perspective view in enlarged scale of the sliding carriage of Fig. 9.

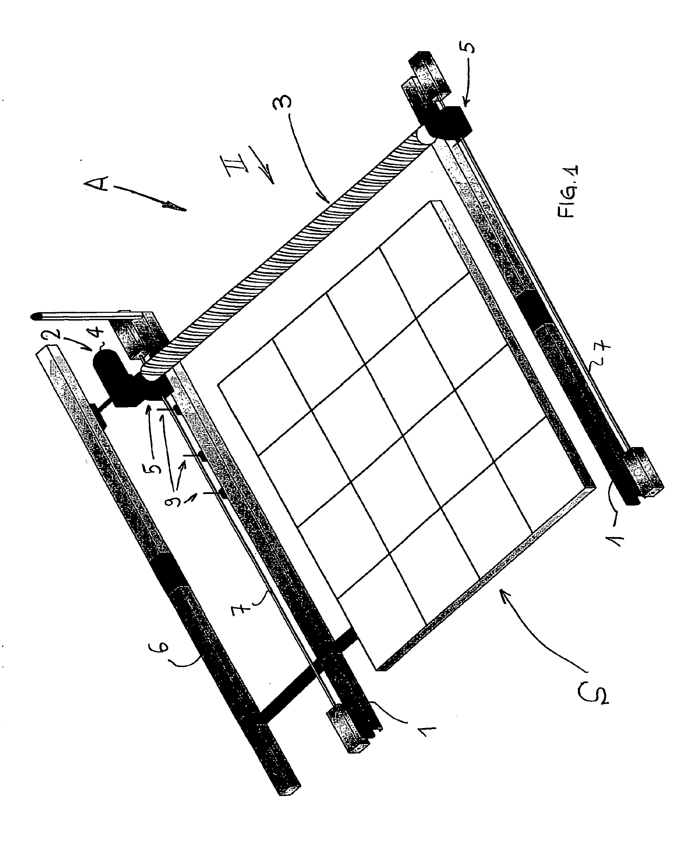

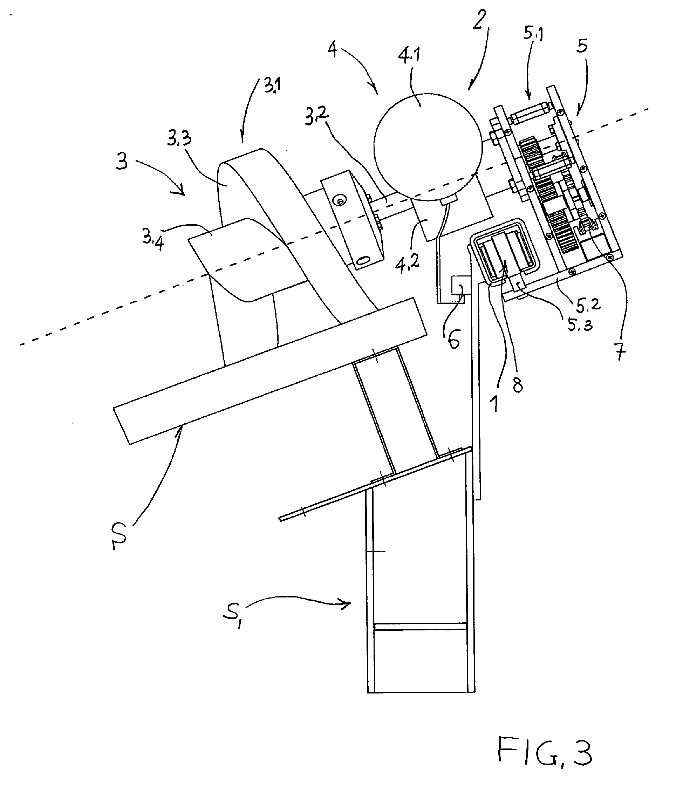

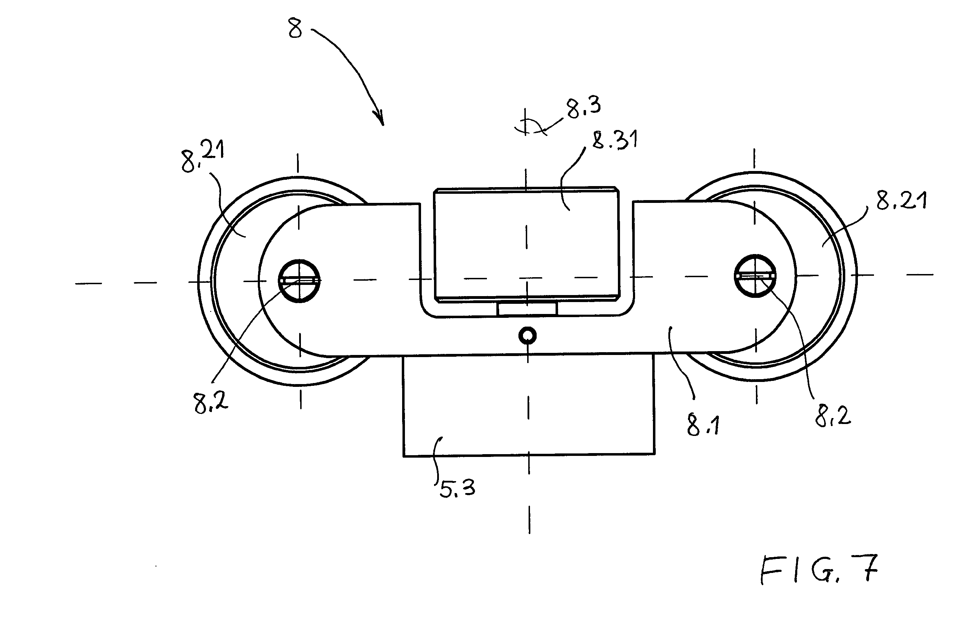

### First embodiment of the invention (Figs. 1-7).

With reference to the drawing, the letter A (Fig. 1) indicates as a whole the automatic cleaning device for a solar panel S, according to an embodiment of the invention.

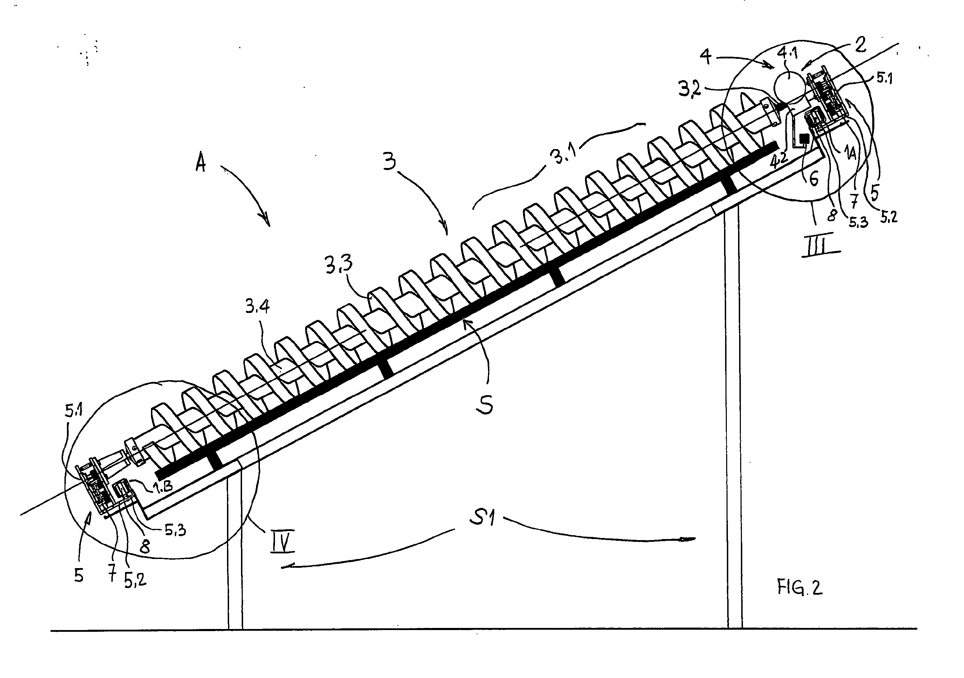

Said cleaning device A comprises:
- two longitudinal rectilinear guides (1), externally fastened on opposite sides of a supporting structure S1 of the solar panel S (Fig. 2), on a plane substantially parallel to said solar panel;
- cleaning means 3 with rotating brush 3.1, comprising an axis 3.2 arranged transversely relative to said longitudinal guides 1 and mounted with the possibility of rotation relative to a drive unit 2, which is mounted moving linearly along said longitudinal guides 1 and is provided with at least one motor means 4 for rotary driving of the rotating brush 3.1 of said cleaning means 3 and for movement of said cleaning means 3, together with the drive unit 2, along said longitudinal guides 1;
- an electrical control panel (known and not illustrated) and
- rainwater / snow sensor means (known and not illustrated) which send an electrical signal to said electrical control panel and cause the start-up of the drive unit 2 when said sensor means detect rainwater.

The drive unit 2 is connected to the longitudinal guides I by means a transmission mechanism, which will be further described and which determines linear displacement of this drive unit 2 along said longitudinal guides 1, when said drive unit 2 is activated.

Moreover, the two longitudinal guides 1 extend horizontally, while the corresponding solar panel S is inclined relative to the horizontal plane (Fig. 2), in such a manner that these guides 1 are arranged at different levels, one, indicated with 1A, being higher relative to the other, indicated with 1B (Fig. 2).

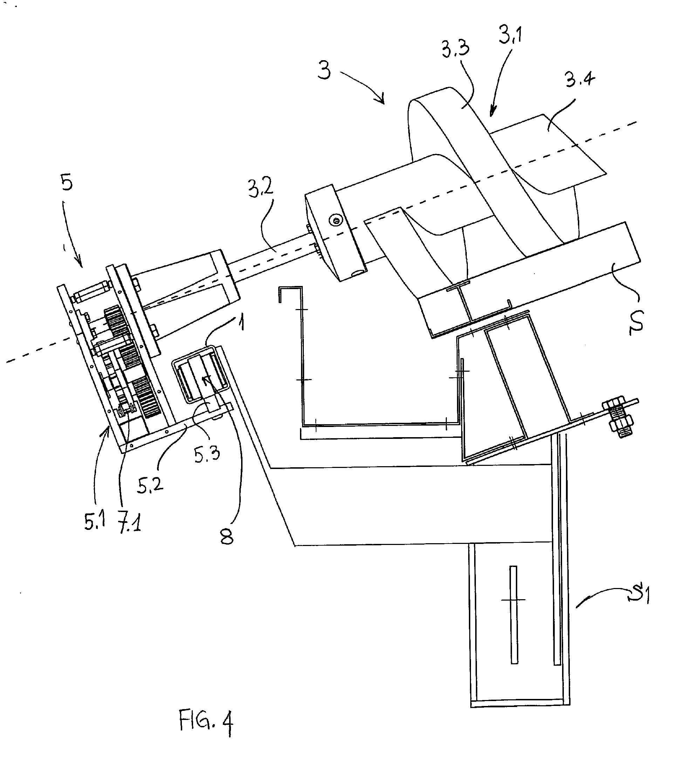

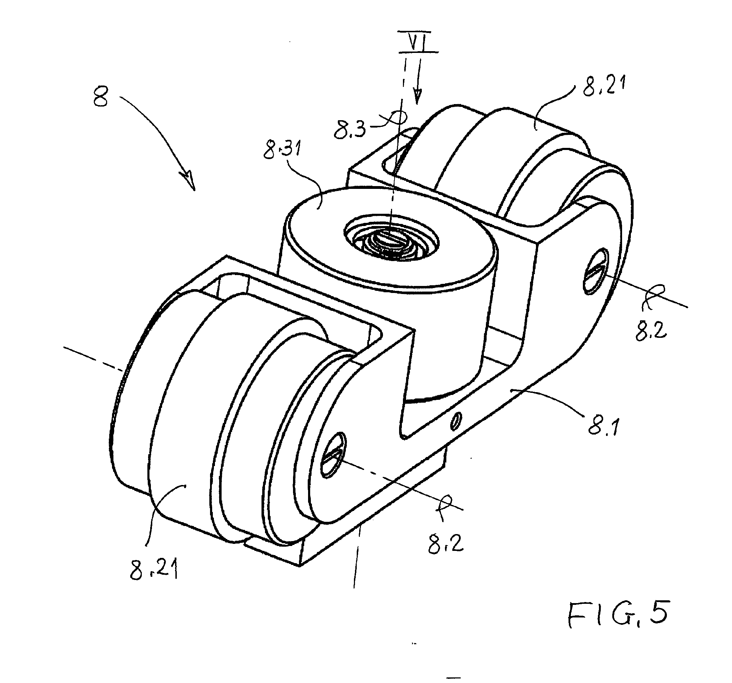

In particular, the shaft 3.2 of said brush 3.1 is connected in a revolving manner, at the axial ends thereof, with respective heads 5 (Figs. 4, 5), each including a respective gearbox 5.1. Said motor means 4 comprises an electric motor 4.1 with gearmotor 4.2 and is fastened relative to the head 5 in proximity of the upper rectilinear guide 1A. Said electric motor 4.1 with gearmotor 4.2 imparts the rotational motion to said shaft 3.2 of the brush 3.1 and, through this shaft and an extension thereof, to the gearbox 5.1 arranged at the end of said shaft. Each gearbox 5.1 comprises a respective system of toothed wheels, the kinematic output of which is formed by a pinion, meshing in a corresponding articulated Galle chain 7 fixed and suspended, parallel to each rectilinear guide 1. Each chain 7 is provided with a respective chain tensioner 7.1. This arrangement produces the traction of said brush means 3 with said motor means 4 along said guides 1, which are formed by respective continuous metal profiles with rectangular cross section and opened at the bottom by means of a continuous longitudinal slot 1.1. Said rectilinear guides 1 are permanently constrained to the structure of the solar panel S with specific brackets.

A pair of sliding carriages 8, integral with a respective head 5, is engaged slidingly in each rectilinear guide 1. In particular, said pair of sliding carriages 8 is housed inside the corresponding guide 1 and is fastened to the respective head 5, by means of a bracket 5.2 projecting from said head and fixed stem 5.3 extending from and orthogonal to said bracket.

Said electric motor 4.1 rotates for example at 1400 rpm, which is reduced seven times through a worm gear speed reducer, to enable the shaft 3.2 of brush 3.1 to rotate at 200 rpm. The system of toothed wheels of each gearbox 5.1 causes synchronous advance of the two drive units 2 with rotating brush 3 along the guides 1 of around 12 m/min.

The power supply of the motor means 4 is provided by a specific electrified track 6, parallel to the upper rectilinear guide 1A and mounted at said electric motor 4.1. In said electrified track 6 there slides a shunt carriage (not shown), fastened with a specific fixing bracket and whose sliding contacts are electrically connected to said motor 4.1, in such a manner as to enable long distances to be covered without cables routed in the structures of the solar panels.

Moreover, the device according to the invention has been designed also to operate on racks in place of the aforesaid tensioning chains.

Limit switches 9, connected to an electronic control circuit and fastened relative to the guides 1, determine the steps of acceleration, deceleration and advance with corresponding reversal of the rotation motion of the drive unit 2 with rotating brush 3 along the guides 1, to perform cleaning cycles.

According to the invention, each carriage 8, which slides inside the respective guide 1, comprises (Fig. 5) a support 8.1 essential U-shaped, inferiorly fastened to said stem 5.3 fixed to the bracket 5.2 of the respective head 5. Said U-shaped support 8.1 carries three axes, two of which external 8.2, parallel to each other and to an inner face of said guide 1 in which the slot 1.1 is provided, and an intermediate one 8.3, contained in a plane orthogonal to the plane containing said two axes 8.2. Each axis 8.2, 8.3 supports a corresponding idle wheel, i.e. the carriage 8 comprises two external wheels 8.21 and one intermediate wheel 8.31. The two external wheels 8.21 have the rolling surface thereof in contact with said inner face of the guide 1 in which the slot 1.1 is provided.

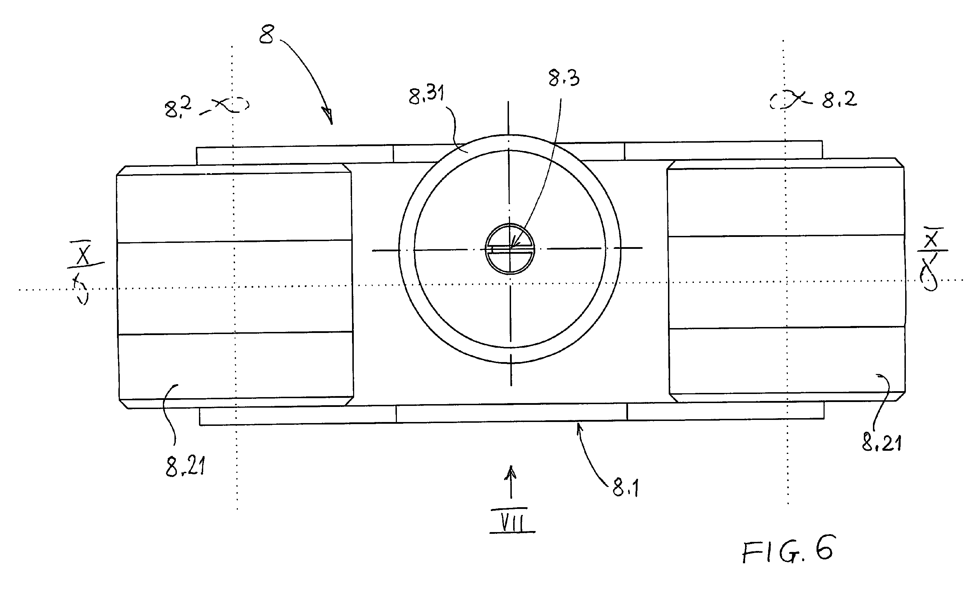

The intermediate axis 8.3 is offset toward the outside of the U-shaped support 8.1, in such a manner that the corresponding intermediate wheel 8.31 has the rolling surface thereof in contact with the inner face of the lateral wall of said guide 1 which is facing downward. This fact is highlighted in Fig. 6, in which X-X indicates the longitudinal vertical median plane of the carriage 8: it is evident how the axis 8.3 of the intermediate wheel 8.31 is spaced from said median plane, in the direction specified above.

Therefore, the two carriages 8 slidingly engaged in the respective guides 1, when the cleaning device A is associated with an inclined solar panel S, support the overall weight of this device, discharging it - without appreciable friction, by means of the wheels 8.21, 8.31 - on said guides 1, in part onto the bottom wall with continuous slot 1.1 of said guides and in part onto the downward facing lateral wall of these guides.

This arrangement enables rapid wear of both the guides 1 and of the wheels of the carriage 8 to be prevented, as the intermediate wheel 8.31 of each carriage supports a significant part of the load. Possible jamming of the device A is thus also prevented. The wheels 8.21, 8.31 are coated in polyamide to deaden noise and improve sliding.

Moreover, again according to the invention, the brush 3.1 of the cleaning means 3 has the bristles 3.3 of the brush arranged with a helical arrangement on a tubular support 3.4, for example in polypropylene, permanently fitted around the shaft 3.2, for example in steel, to give carrying capacity during operation. Said bristles 3.3 of the brush are arranged on said support 3.4 with helical arrangement with pitch between the turns substantially equal to the width of the bristles. In this way, said pitch of the helix forms in the brush a discharge channel which, when the brush 3.1 is rotating, causes, in the manner of a screw conveyor, the transportation of water, of snow and/or of the dirt located on the surface of the solar panel S downward, substantially according to the slope of this panel.

### AUTOMATIC OPERATION OF THE DEVICE A

The device A has been conceived for automatic operation through an electronic control system and corresponding recorded operation program.

The device A is activated automatically, starting from a rest position located at the side of the surface of the panel S to be treated, after having received an electrical signal from a specific rainwater / snow sensor, and carries out a preset number of cleaning cycles. While the device is operating, a fixed indicator light indicates movement of the drive unit 2 with cleaning means 3. When the cleaning cycle has terminated, a timer prevents further operating cycles for a preset time.

In the event of snow, again through the specific sensor, the device A starts an automatic snow clearing cycle which removes the snow from the surface of the panel S. The cleaning cycles are set with preset time scanning in order to prevent the accumulation of large quantities of snow, which would consequently be difficult to remove.

### MANUAL OPERATION

Manual operation of the device A has been conceived for the maintenance steps, in order to check correct operation of the system or repair it if necessary. In this case, a radio frequency remote control is provided and can be used, after the operation has terminated, to activate the system manually and directly check movements, rotations and cycles in the vicinity of the machine, thereby managing rotations and advances without requiring to access the control boards.

It is possible to equip the device with an accessory from which forced water is sprayed directly on the cleaning brush. In this case, the water spraying cycle is controlled manually by the operator present on location.

### INVERTER ELECTRONIC APPARATUS

The device A comprises an electronic control system, which is composed of a power inverter capable of managing the movements and the control of the electric motor 4.1 rotation. In particular, the system generates accelerations and decelerations activated by three limit switches 9 positioned on the sliding guides 1 and which determine the points in which the drive unit 2 with cleaning means 3 must vary its rotation and speed.

The operating parameters of the inverter are managed by a programmable electronic card of PLC type, which manages all the operating commands through pre-programmed software.

### PLC ELECTRONIC APPARATUS

The electronic management apparatus mounted in a specific waterproof box, is composed of a switching power supply with a voltage of 24 volt to control relays, PLC module with basic software, electronic inverter, manual remote control reception card, for mobile telephone management card, telephone command and long distance remote control activation relay.

The cover of the box is provided with a green light to indicate normal operation, a fault warning light, a key selector for manual/automatic operation with corresponding selection lights and an emergency shutdown button,
all with power supply controlled upstream through a thermal switch.

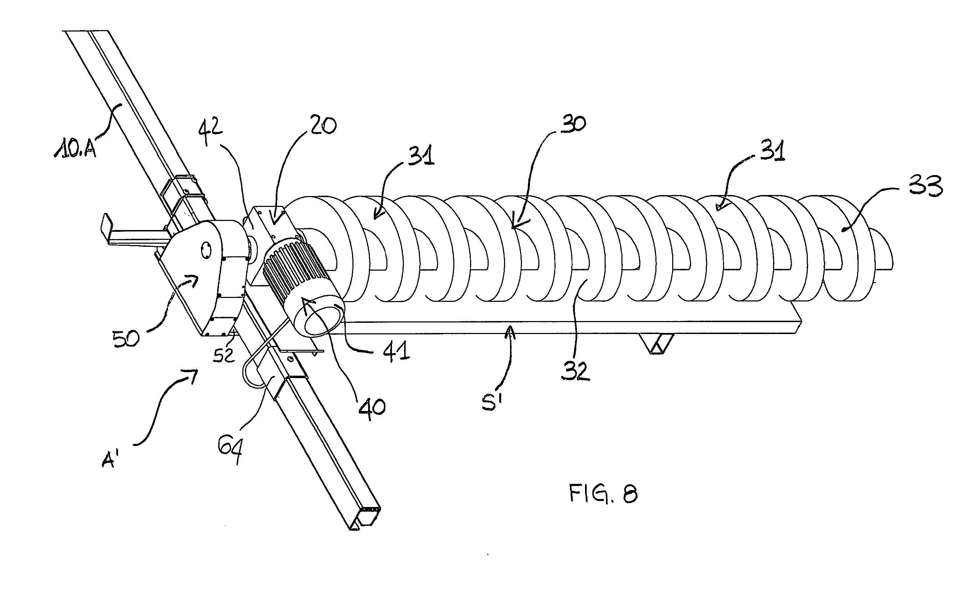

### Second embodiment of the invention (Figs. 8-10).

The present embodiment differs from the previous one only insofar as explicitly described below.

For the remaining part, the considerations and the technical teachings of the first embodiment, described above, are valid.

In Fig. 8, A' indicates the device, only one part of which is visible.

Said device A' comprises:
- two rectilinear guides 10, the guide 10.A of which is visible in particular;
- a drive unit 20, comprising a motor means 40 with respective electric motor 41 and reducer 42;
- rotating brush cleaning means 30, comprising a brush 31 which has bristles 33, arranged with a helical arrangement on a shaft 32;
- a solar panel S', on which said cleaning means 30 operate;
- a head 50, connected to said motor means 40,
all according to a technical arrangement corresponding to the one described and illustrated with reference to said first embodiment.

### Rectilinear guides

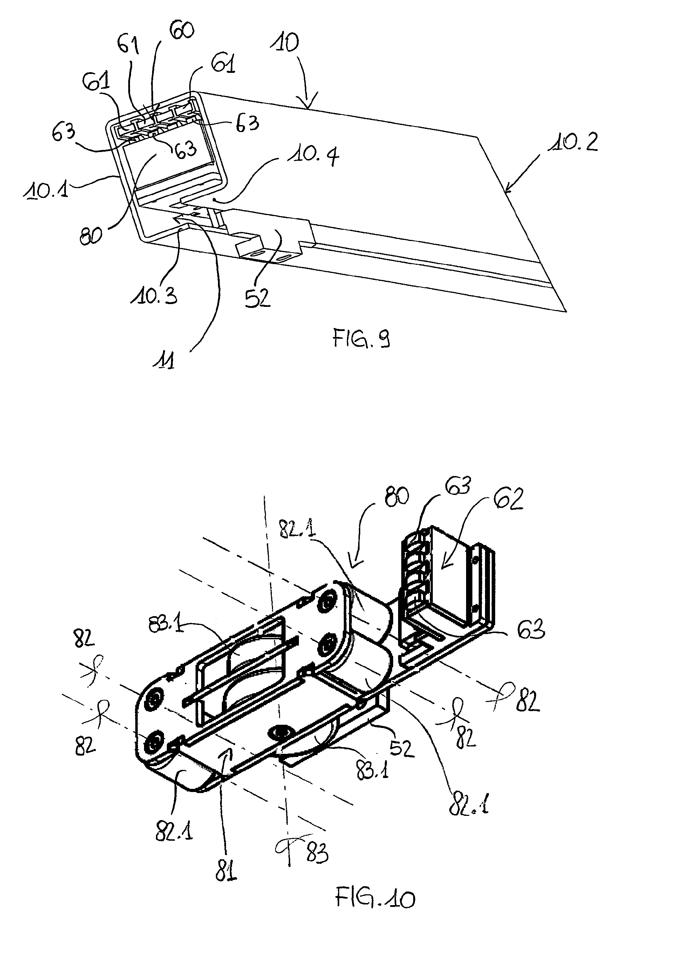

With particular reference to Fig. 9, the number 10 indicates a rectilinear guide, comprising a respective continuous metal profile, with substantially upside down U-shaped cross section, with asymmetric branches 10.1, 10.2 of different height, provided at the free ends with respective continuous orthogonal integral fins 10.3, 10.4, facing inward at different relative levels, in such a manner as to form a continuous longitudinal slot 11, downward and laterally open.

### Carriage

With reference, in particular, to Fig. 10, the number 80 indicates a carriage, which slides inside a respective of said guides 10, comprising a support 81, essentially box-shaped, superiorly and inferiorly open, in part.

Said support 81 is fastened at the bottom to a bracket 52 of a respective head 50.

Said support 81 carries a total of five axes, of which four external 82, lying in pairs in respective transverse planes and parallel to each other and one intermediate 83, contained in a plane orthogonal to the planes containing said four axes 82. Each axis 82 carries a corresponding idle wheel, while the axis 83 supports a pair of idle coaxial wheels: i.e., the carriage 80 comprises four external wheels 82.1 and two intermediate wheels 83.1, said last two being mutually coaxial, independent and having a different external diameter. The four external wheels 82.1 have the rolling surface thereof in contact with the inner lateral faces of said guide 10, while said two coaxial intermediate wheels 83.1 each roll respectively on the inner surface of one of said fins 10.3, 10.4 of said guide 10, the different diameters being such as to compensate the difference in level between these two fins 10.3, 10.4, of said guide 10.

### Electrical connection

The electrical connection between the electrical power supply and said motor means 40 is produced by means of the following arrangement:
- a longitudinal and continuous electrified track 60, fastened in the upper inner part of each guide 10, corresponding to the intermediate branch of this guide, and having four insulated electrical conductors 61, constituted by respective continuous longitudinal bars, with an electrically conductive flat face facing the inside of the respective guide 10;
- electrical current socket means 62 fixed relative to said carriage 80, and comprising four electrically conductive shoes 63, each elastically stressed in continuous sliding electrical contact with a respective of said electrically conductive bars 61;
- insulated flexible electrical cable means 64, producing the electrical connection between three of said electrically conductive shoes 63 and said motor means 40, and
- electrical earthing means (not illustrated), branched electrically from the fourth of said electrically conductive shoes 63, and from the respective electrically conductive bar 61. By means of the aforesaid arrangement, with the present invention it is possible to achieve the following further advantages:
- to provide an automatic cleaning device for a solar panel A', wherein the power supply line of the drive means 20 of the cleaning means 30, is integrated relative to the guide means 10, simplifying the structure of this device, and reducing the corresponding overall costs;
- to provide a device A' as said, wherein the power supply line of said drive means 20 of said cleaning means 30, is protected in a safe manner against the risk of accidents, as the only passage 11 for the bracket 52 of said carriage 80 that supports the head 50, is too narrow to allow the fingers of a person's hand to be inserted therein.

## Claims

1. An automatic cleaning device for a solar panel, comprising:
- longitudinal rectilinear guides (1, 10), fastened externally on opposite sides of the supporting structure of a solar panel (S, S'), on a plane parallel to said solar panel (S, S'),
- cleaning means (3, 30) transversely arranged relative to the longitudinal guides (1, 10) and mounted with the possibility of rotation relative to a drive unit (2, 20),
- said drive unit (2, 20), which is mounted moving linearly along the longitudinal guides (1, 10) and is provided with at least one motor means (4, 40) for rotary driving of the cleaning means (3, 30) and the movement of said cleaning means (3, 30), together with the drive unit (2, 20), along the longitudinal guides (1, 10),
- an electrical control panel and
- a rainwater / snow sensor which sends an electrical signal to the electrical control panel and determinates the start-up of the drive unit (2, 20) when the sensor detects rainwater / snow,
and wherein said longitudinal guides (1, 10) extend horizontally, while the solar panel (S, S') is inclined relative to the horizontal plane, in such a manner that the guides (1,10) are arranged at different levels, one (1A, 10.A) being higher relative to the other (1B),
**characterized in that**
it comprises sliding means of said drive unit (2, 20) with said cleaning means (3, 30), which include at least one sliding carriage (8, 80) housed sliding in each longitudinal guide (1, 10) by means of a set of idle wheels (8.21, 8.31; 82.1, 83.1) arranged on at least two axes (8.2, 8.3; 82, 83) substantially perpendicular to each other.

2. Automatic cleaning device according to claim 1, **characterized in that** said sliding means of said drive unit (2) comprise a pair of sliding carriages (8) sliding in each guide (1).

3. Automatic cleaning device according to claim 1 and/or 2, **characterized in that** said at least one carriage (8) comprises a support (8.1), inferiorly fastened to a respective head (5) connected to one end of the cleaning means (3) and which has three axes, two external of which (8.2), parallel to each other and to an inner face of said guide (1), and an intermediate one (8.3), which lies in a plane orthogonal to the plane containing said two axes (8.2, 8.3), and **in that** each axis (8.2, 8.3) carries at least one corresponding idle wheel (8.21, 8.31).

4. Automatic cleaning device according to claim 3, **characterized in that** said support (8.1) is essential U-shaped.

5. Automatic cleaning device according to claim 3 and/or 4, **characterized in that** said intermediate axis (8.3) is offset toward the outside of the support (8.1), in such a manner that the corresponding intermediate wheel (8.31) has the rolling surface thereof in contact with the inner face of the lateral wall of the related guide (1) which is facing downward.

6. Automatic cleaning device according to claim 1, **characterized in that** said cleaning means (3, 30) comprise a brush (3.1, 31), which has the bristles (3.3, 33) of the brush arranged with a helical arrangement.

7. Automatic cleaning device according to claim 6, **characterized in that** said bristles (3.3, 33) of the brush (3.1, 31) are arranged with a helical arrangement with pitch between the turns substantially equal to the width of the bristles, in such a manner that said pitch of the helix forms in the brush a discharge channel which, when the brush (3.1, 31) is rotating, causes, in the manner of a screw conveyor, the transportation of water, snow and/or of the dirt located on the surface of the solar panel (S, S') downward, substantially according to the slope of this panel.

8. Automatic cleaning device according to claim 1, **characterized in that** each of said rectilinear guides (10) comprises a respective continuous metal profile, with substantially upside down U-shaped cross section, with asymmetric branches (10.1, 10.2) of different height, provided at the free ends with respective integral continuous orthogonal fins (10.3, 10.4), facing inward at different relative levels, in such a manner as to form a continuous longitudinal slot (11), open downward and/or laterally.

9. Automatic cleaning device according to claim 1 and/or 8, **characterized in that** said carriage (80) comprises a support (81) fastened lower to a bracket (52) of a respective head (50), connected to one end of said cleaning means (30), said support (81) carrying a total of five axes, of which four external (82), lying in pairs in respective transverse planes and parallel to each other and an intermediate one (83), contained in a plane orthogonal to the planes containing said four axes (82),
and **in that**
each axis (82) carries a corresponding idle wheel, while the axis (83) supports a pair of idle coaxial wheels.

10. Automatic cleaning device according to the preceding claim, **characterized in that** said carriage (80) comprises four external wheels (82.1) and two intermediate wheels (83.1), said last two wheels (83.1) being mutually coaxial, independent and having a different external diameter,
and **in that**
said four external wheels (82.1) have the rolling surface thereof in contact with the inner lateral faces of said guide (10), while said two coaxial intermediate wheels (83.1) each roll respectively on the inner surface of one of said fins (10.3, 10.4) of said guide (10), the different diameters being such as to compensate the difference in level between these two fins (10.3, 10.4), of said guide (10).

11. Automatic cleaning device according to claim 1 and/or one or more of claims 8 to 10, **characterized in that** it comprises an electrical connection between the electrical power supply and said motor means (40), produced by means of the following arrangement:
- a longitudinal and continuous electrified track (60), fastened in the upper inner part of each guide (10), at the intermediate branch of this guide, and having four insulated electrical conductors (61), constituted by respective continuous longitudinal bars, with an electrically conductive flat face facing the inside of the respective guide (10);
- electrical current socket means (62) fixed relative to said carriage (80), and comprising four electrically conductive shoes (63), each elastically stressed in continuous sliding electrical contact with a respective of said electrically conductive bars (61);
- insulated flexible electrical cable means (64), producing the electrical connection between three of said electrically conductive shoes (63) and said motor means (40), and
- electrical earthing means, branched electrically from the fourth of said electrically conductive shoes (63), and from the respective electrically conductive bar (61).
